Europäisches Patentamt

European Patent Office

Office européen des brevets

(19)

(11) Veröffentlichungsnummer: **0 078 507**
A1

(12) # EUROPÄISCHE PATENTANMELDUNG

(21) Anmeldenummer: **82109953.8**

(51) Int. Cl.³: **C 04 B 29/02**

(22) Anmeldetag: **28.10.82**

(30) Priorität: **31.10.81 DE 3143297**

(71) Anmelder: **HOECHST AKTIENGESELLSCHAFT, Postfach 80 03 20, D-6230 Frankfurt/Main 80 (DE)**

(43) Veröffentlichungstag der Anmeldung: **11.05.83 Patentblatt 83/19**

(72) Erfinder: **Dürsch, Walter, Dr., In der Braubach 4, D-6240 Königstein/Taunus (DE)**
Erfinder: **Eckardt, Peter, Dr., Brandenburger Weg 14, D-6238 Hofheim am Taunus (DE)**

(84) Benannte Vertragsstaaten: **AT BE CH DE FR GB LI NL SE**

(54) **Anorganischer Schaumstoff und Verfahren zu seiner Herstellung aus Zement.**

(57) Eine wäßrige Lösung von Aluminium- und Zinkphosphat wird mit Portland-Zement, der teilweise durch basische Zuschlagstoffe ersetzt sein kann, einem in saurem Milieu wirksamen Blähmittel, einer Flugasche mit über 80 Gew.-% $SiO_2$, sowie gegebenenfalls weiteren Zusätzen vermischt. Die Menge des Blähmittels ist so bemessen, daß bei der Reaktion 2 bis 10 ml Gas pro Gramm der Reaktionsmischung entbunden werden. Das aufschäumende Gemisch wird in eine Form gefüllt und dort verfestigt. Dann wird der Schaum der Form entnommen, langsam auf 120–160 °C und schließlich auf 220–500 °C aufgeheizt. Man erhält einen anorganischen Schaumstoff der Dichte 100–500 g/l.

EP 0 078 507 A1

HOECHST AKTIENGESELLSCHAFT — 1 — 0078507
Dr.SF/ss

HOE 81/F 294

Anorganischer Schaumstoff und Verfahren zu seiner
Herstellung aus Zement

Die vorliegende Erfindung betrifft einen anorganischen Schaumstoff sowie ein Verfahren zu seiner Herstellung unter Verwendung von Portland-Zement und einer konzentrierten wäßrigen Lösung, die primäres Aluminiumphosphat enthält.

Es sind bereits anorganische Schaumstoffe auf Basis Gips oder Zement bekannt. Wegen ihrer hohen Dichte, die normalerweise nicht unter 400 g/l liegt, ist die Wärmedämmung jedoch im Vergleich zu den leichten organischen Schaumstoffen gering. Leichte anorganische Schäume, die aus Wasserglas hergestellt werden, haben herstellungsbedingt einen hohen Anteil an leichtlöslichen Salzen, der zu Ausblühungen führen kann, wenn nicht nachträglich die Alkalisalze herausgelöst werden.

In der US-PS 3 382 082 werden anorganische Schaumstoffe beschrieben, die aus freier wasserhaltiger Phosphorsäure und Aluminiumhydroxid unter Zusatz von kleinen Mengen eines gasentwickelnden Metallpulvers (wie zum Beispiel Aluminium) und von fein verteiltem Aluminiumphosphat hergestellt werden. Dabei setzen sich Phosphorsäure und Aluminiumhydroxid stets zu primärem Aluminiumphosphat um, während die Bildung von sekundärem oder tertiärem Aluminiumphosphat von der Gegenwart ausreichender Mengen an Aluminiumhydroxid abhängt. Die mechanische Stabilisierung des geschäumten Formkörpers geschieht durch Trocknen bei 95 - 100°C.

In der US-PS 3 762 935 wird auf Spalte 1 zu diesem Verfahren angemerkt, daß der Schaum während des Erhärtens teilweise zusammenfällt. Es wird daher empfohlen, bei der Herstellung des Schaumstoffs das feste Aluminiumphosphat durch gemahlene Glasfritte zu ersetzen. Ferner soll nach dem Trocknen der geschäumte Formkörper auf ca. 500 - 1100°C erhitzt werden, damit die Glasfritte schmilzt und die innere Oberfläche der Schaumstoff-Poren überzieht. Nachteilig an diesem Verfahren ist die Notwendigkeit, den Schaumstoff bei sehr hohen Temperaturen auszuhärten.

Leichte anorganische Schaumstoffe (mit Dichten von etwa 50 bis 150 g/l) werden in der DE-OS 2 756 198 beschrieben. Sie werden hergestellt durch Vermischen eines Carbonats eines mehrwertigen Metalls mit der wäßrigen Lösung von sauren Metallphosphaten mehrwertiger Metalle. Die Mischung wird verschäumt und bei Raumtemperatur ausgehärtet. Der Schaumstoff kann ferner Zuschlagstoffe, Verstärkungsmaterialien und/oder Füllstoffe enthalten, um die mechanische Festigkeit zu verbessern. Bei der Verschäumung dienen die Carbonate sowohl als Reaktionspartner für die sauer reagierenden primären Metallphosphate als auch als Blähmittel. Durch diese Doppelaufgabe der Carbonate wird die Möglichkeit. die Verfahrensbedingungen zu variieren, eingeschränkt. Nachteilig ist ferner, daß der anorganische Schaumstoff, der sich nach diesem Verfahren erhalten läßt. nur wenig wasserfest ist. was sich besonders in Gegenwart großer Mengen von Wasser zeigt. Auch die empfohlenen Zusätze von Hydrophobiermitteln vermögen die Wasserfestigkeit nur unwesentlich zu erhöhen.

In der DE-OS 2 114 735 wird ein poröses, feuerfestes, wärmeisolierendes Material beschrieben, das in der Hauptsache aus kondensierten Metallphosphaten besteht. Es läßt sich herstellen aus einem flüssigen Gemisch von verdünnter Phosphorsäure, einer 50 %-igen Lösung von Monoaluminiumphosphat in Wasser und einem festen Gemisch von Calciumaluminat und Akalisilikat, gegebenenfalls unter Zusatz feuerfester Stoffe, wie Quarzsand, sowie einem Metallpulver, das in saurem Milieu als Blähmittel wirkt. Calciumaluminat kann dabei auch in Form von Tonerdeschmelzzement eingesetzt werden. Die so hergestellten Produkte sind jedoch ziemlich schwer (Dichte über 550 g/l). Da von wäßrigen Lösungen ausgegangen wird, enthält das Material noch viel Wasser, das verdampft. sobald hohe Temperaturen erreicht werden. Beim Erhitzen auf ca. 500°C kommt es zu erheblichem Schrumpf unter Rißbildung.

Es bestand daher die Aufgabe. einen anorganischen Schaumstoff mit guten mechanischen und thermischen Eigenschaften bereitzustellen, der die Nachteile der bekannten Produkte nicht aufweist und der sich einfach und wirtschaftlich aus leicht zugänglichen Ausgangsstoffen herstellen läßt. Insbesondere sollte dabei Portland-Zement als basische Komponente für die Reaktion mit Phosphatlösungen eingesetzt werden können.

Portland-Zement enthält, im Gegensatz zu Tonerdeschmelzzement, beträchtliche Mengen an Tricalcium-Silikat. das in Gegenwart von Wasser unter starker Wärmeentwicklung schnell zu stark basischem Calciumhydroxid hydrolysiert. Ebenso ist die Reaktion des Portland-Zements mit Lösungen von sauren Metallphosphaten nach Beobachtungen der Anmelderin um so heftiger, je mehr Wasser vorhanden ist. Diese Reaktionsfähigkeit macht es schwierig, Portland-Zement zusammen mit sauren Phosphaten oder mit Phosphorsäure für die Herstellung anorganischer Schäume einzusetzen.

Es wurde nun ein Verfahren zur Herstellung eines anorganischen Schaumstoffs aus Zement, einer Monoaluminiumphosphat enthaltenden Lösung und einem Blähmittel gefunden, das dadurch gekennzeichnet ist, daß man aus

a) 1 Gewichtsteil einer wäßrigen Lösung von Aluminium- und Zinkphosphat mit einem Wassergehalt von 12 - 25 Gew.-% und einem Atomverhältnis Aluminium:Zink von 0,3:1 bis 2,0:1, die zusätzlich Magnesium- und/ oder Calcium-Ionen in einem Äquivalentverhältnis (Magnesium + Calcium):(Aluminium + Zink) von 0:1 bis 0,25:1 enthalten kann und ein Äquivalentverhältnis ortho-Phosphat:(Aluminium + Zink + Magnesium + Calcium) von 2,7:1 bis 3,3:1 aufweist,

b) 0,2 bis 0,8 Gewichtsteilen Portland-Zement, der teilweise durch basische Zuschlagstoffe ersetzt sein kann,

c) einem in saurem Milieu wirksamen Blähmittel,

d) 0,05 bis 0,5 Gewichtsteilen einer Flugasche mit über 80 Gew.-% Siliciumdioxid,

e) gegebenenfalls unter Zusatz verfestigender Zusatzstoffe, Porenregler, Schaumstabilisatoren und saurer Beschleuniger,

eine Mischung bereitet, man dabei die Menge des Blähmittels so bemißt, daß bei der Reaktion 2 bis 10 ml Gas pro Gramm der Reaktionsmischung entbunden werden, man das aufschäumende Gemisch in eine Form füllt, man den Schaum mindestens 1 Stunde im Temperaturbereich von 0 - 60°C hält, man den Schaum der Form entnimmt, ihn langsam auf Temperaturen von 120 - 160°C aufheizt, bis die Hauptmenge des Wassers entfernt ist, man anschließend auf eine Temperatur von 220° - 500°C erhitzt und den Schaumstoff mindestens 5 Min. in diesem Temperaturbereich hält.

Geeignete Portland-Zement-Typen sind PZ 35, PZ 45 und PZ 55. Bevorzugt ist die Type PZ 35. Gemäß "Zementchemie für Bauingenieure" von W.Czernin (3. Aufl., (1977) Bauverlag GmbH, S. 34) enthalten Portland-Zemente ca. 27 - 68 % Tricalciumsilikat (3 CaO · $SiO_2$), ca. 7 - 43 % Dicalciumsilikat (2 CaO · $SiO_2$), ca. 7 - 15 % Tricalciumaluminat (3 CaO · $Al_2O_3$), ca. 9 - 14 % Tetracalciumaluminatferrit (4 CaO · $Al_2O_3$ · $Fe_2O_3$) und ca. 3 % Calciumsulfat ($CaSO_4$).

Wegen der relativ hohen Gehalte an Tricalciumsilikat, das in Gegenwart von Wasser schnell in Calciumhydroxid übergeht, vermag 1 g Portland-Zement z.B. bei 30-minütigem Umschütteln mit 50 ml 1n HCl ca. viermal mehr Säure zu neutralisieren als 1 g Tonerdeschmelzzement. Portland-Zement reagiert auch mit äquivalenten Mengen ortho-Phosphorsäure (75 - 100 Gew.-% $H_3PO_4$) so rasch, daß sich die Masse nicht gleichmäßig vermischen läßt und unter starker Erwärmung schnell erstarrt. Es ist daher überraschend, daß sich Bedingungen finden lassen, unter denen die Umsetzung von sauren Phosphaten mehrwertiger Metalle mit Portland-Zement erfolgreich zur Herstellung eines Schaumstoffs benutzt werden kann.

Durch Zusatz von basischen Zuschlagstoffen zum Portland-Zement kann die Umsetzung verlangsamt werden, so daß die Komponenten gründlich gemischt werden können. Als basische Zuschlagstoffe gelten Verbindungen, die selbst mit den Lösungen der primären Metallphosphate noch reagieren können. Insbesondere kommen hierfür infrage sogenannte Hütten- oder Hochofenzemente (Mischungen aus Portland-Zement und Hochofenschlacke), Calciumaluminat, insbesondere in Form des Tonerdeschmelzzements sowie Oxide und Hydroxide von Zink, Magnesium und Aluminium. Im allgemeinen reichen Zusätze von 0 bis 150 Gew.-%, insbesondere 0 bis 100 Gew.-% (bezogen auf das Gewicht des Portland-Zements) aus.

Die eingesetzten wäßrigen Lösungen von Aluminium- und Zinkphosphat bestehen in der Hauptsache aus den primären Metallphosphaten. Falls diese Lösungen einen Wassergehalt aufweisen, der merklich höher ist als 25 %, so kommt es zu einer heftigen Reaktion, aber nicht zur Bildung eines stabilen Schaums. Lösungen mit einem Wassergehalt unter 12 % sind meist so hochviskos, daß sie sich mit den anderen Komponenten nicht mehr zufriedenstellend vermischen lassen.

Hochprozentige, heiß hergestellte Lösungen von reinem primären Aluminiumphosphat oder primärem Zinkphosphat bleiben nicht lange klar und flüssig, sondern neigen zur Abscheidung von Niederschlägen und zur Kristallisation. Dies gilt besonders für Feststoffgehalte von über 80 % und Lagern bei Raumtemperatur und trifft in noch stärkerem Maße zu für hochprozentige Lösungen von primärem Calciumphosphat oder oder primärem Magnesiumphosphat.

Diese Nachteile zeigen 75 - 88 gew.-%ige, bevorzugt 80 - 85 gew.-%ige, Lösungen aus Gemischen von Aluminiumphosphat und Zinkphosphat mit Atomverhältnissen Aluminium:Zink von 0,3:1 bis 2,0:1 und einem Äquivalentverhältnis ortho-Phosphat:Metall von 2,7:1 bis 3,3:1 nicht. Bevorzugt sind hierbei Atomverhältnisse Aluminium:Zink von 0,6:1 bis 1,2:1 und ein Äquivalentverhältnis ortho-Phosphat:Metall von 2,95:1 bis 3,05:1. Die genannten Lösungen sind klar oder schwach trüb und bleiben auch nach längerem Stehen bei Raumtemperatur noch gießbar. Dies ist auch noch der Fall, wenn bis zu 20 % der Aluminium- und Zinkäquivalente durch Magnesium- und/oder Calcium-Äquivalente ersetzt werden.

Diese Phosphatlösungen mit Gehalten an Aluminium und Zink und Magnesium und/oder Calcium werden zweckmäßigerweise dadurch hergestellt, daß zunächst berechnete Mengen von Zinkoxid oder Zinkhydroxid, dann von Aluminumhydroxid und den Oxiden oder Hydroxiden von Magnesium und/oder Calcium in Phosphorsäure gelöst werden und durch Abdestillieren von Wasser der Restwasser-Gehalt auf 12 - 25 %, insbesondere 15 - 20 Gew.-%, reduziert wird. Zum Lösen kann reine handelsübliche Phosphorsäure verwendet werden, aber auch ungereinigte rohe 50 - 100 %ige, bevorzugt 60 - 90 %ige, wäßrige Säure. Das Lösen geschieht bei Temperaturen von 20 - 130°C, bevorzugt bei 50 - 120°C.

Lösungen mit Wassergehalten von 12 bis 15 Gew.-% sind bei Raumtemperatur zu viskos. Sie können nur bei Temperaturen über 30°C eingesetzt werden. Temperaturen über 50°C sind im allgemeinen nicht vorteilhaft, da bei der sich anschließenden Umsetzung mit den basischen Anteilen hohe Reaktionstemperaturen auftreten, die die Bildung eines stabilen Schaums beeinträchtigen.

Lösungen mit Viskositäten von 20.000 bis 500.000 mPa's, insbesondere 50.000 bis 400.000 mPa's, sind besonders geeignet.

Als Blähmittel eignet sich besonders basisches Magnesiumcarbonat, insbesondere ein basisches Magnesiumcarbonat der Formel $4 \, MgCO_3 \cdot Mg(OH)_2 \cdot 5 \, H_2O$. Aluminium-, Zink-, Magnesium- und Eisenpulver sind beim erfindungsgemäßen Verfahren nur wenig wirksam, obwohl sie in Gegenwart von verdünnter wäßriger Phosphorsäure gut als Blähmittel einsetzbar sind.

Der Zusatz der Flugasche mit über 80 Gew.-% $SiO_2$ fördert die Schaumbildung, d.h. wirkt einem nutzlosen Entweichen des aus dem Blähmittel freigesetzten Treibgases entgegen. Bevorzugt sind Flugaschen mit einem Gehalt von über 84 Gew.-% $SiO_2$, insbesondere solcher, die bei der Herstellung von Ferrosilicium anfallen.

Die Menge des Blähmittels soll so bemessen sein, daß bei der Reaktion mit den sauer reagierenden Lösungen der primären Phosphate mehrwertiger Metalle 2 - 10 ml Gas pro Gramm der Reaktionsmischung (gemessen bei 180°C und 1 bar) entbunden werden. Bevorzugt sind Gasmengen von 5 - 9 ml pro Gramm der Reaktionsmischung. Bei Verwendung von basischem Magnesiumcarbonat als Blähmittel liegt das Gewichtsverhältnis Metallphosphat-Lösung/Blähmittel im allgemeinen zwischen 1:0,05 bis 1:0,2, insbesondere zwischen 1:0,08 bis 1:0,15. Dem Reaktionsgemisch können in kleinen

0078507

Mengen auch andere Kieselsäure-Derivate wie Kieselgele, disperse Kieselsäuren, Kieselgure, Quarzmehle, Natriumsilikat, Kaliumsilikat, Calciumsilikate, Schiefermehle, Basaltmehle, Calciumsilikate, wie Wollastonit, Magnesiumsilikate, wie Talkum und Aluminiumsilikate, wie Kaolin, zugesetzt werden. Hierdurch wird die mechanische Festigkeit der erhaltenen Schaumstoffe verbessert. Zugesetzt werden können ferner Ruß, Graphit und/oder Borsäure oder Borax, sowie gegebenenfalls Farbstoffe.

Wenn dem Reaktionsgemisch kleine Mengen anorganischer Fasern zugesetzt werden, so läßt sich die mechanische Stabilität des erhaltenen Schaumstoffes noch stärker verbessern. Besonders geeignet sind hierfür kurzgeschnittene Glas- oder Mineralwolle-Fasern oder Kohlenstoffasern von 2 - 10 mm, insbesondere 3 - 5 mm Länge. Ebenso lassen sich schwer schmelzbare organische Fasern, z.B. aus aromatischen Polyamiden, einarbeiten. Allerdings darf in diesem Fall der entstehende Schaumstoff nicht auf Temperaturen über etwa $300^{\circ}$C beansprucht werden.

Diese verfestigenden Zusatzstoffe werden in Mengen von maximal 40 Gew.-%, insbesondere von maximal 20 Gew.-%, bezogen auf das Gewicht der Phosphat-Lösung eingearbeitet.

Dem Reaktionsgemisch können in geringen Mengen auch Verbindungen zugesetzt werden, die hydrophobierend wirken. Hierfür sind geeignet Polysiloxane und/oder Verbindungen mit polaren Gruppen und Kohlenstoffketten mit über 10 Kohlenstoffatomen, beispielsweise Dimethyldodecylamin oder Dimethylstearylamin. Der Zusatz dieser Verbindungen führt zur Bildung feinerer und gleichmäßiger Poren. Die Porenregler werden im allgemeinen in Mengen von maximal 0,5 %, insbesondere 0,1 - 0,3 Gew.-% dem Reaktionsgemisch zugesetzt.

- 9 -

0078507

Dem Reaktionsgemisch können ferner hochviskose wäßrige Lösungen von hochmolekularen organichen Verbindungen zugesetzt werden, beispielsweise 1 - 10 %ige Lösungen von Methylcellulose, Hydroxiethyl-Cellulose, Polyvinylalkohol, Gelatine und/oder Alkalicaseinaten. Diese Lösungen werden zweckmäßigerweise in Mengen von maximal 4 Gew.-%, bevorzugt maximal 3 Gew.-%, der Phosphatlösung zugesetzt. Durch diese Maßnahme läßt sich das Zusammensacken des einmal gebildeten Schaums verhindern oder verzögern und die Rührbarkeit verbessern.

Zur Beschleunigung der Umsetzung können dem flüssigen Teil des Ansatzes noch kleine Mengen saurer Beschleuniger einverleibt werden, beispielsweise bis zu 4 Gew.-% (bezogen auf das Gesamtgemisch) aliphatische Phosphonsäuren (in Form ihrer konzentrierten wäßrigen Lösungen) oder Polyphosphorsäure. Die Reaktion läßt sich ferner beschleunigen, wenn das Äquivalentverhältnis Ortho-Phosphat:Metall in der eingesetzten Phosphatlösung erhöht wird.

Auf ein Gewichtsteil der wäßrigen Phosphatlösung werden vorzugsweise 0,3 - 0,6 Gew.-Teile Portland-Zement inklusive basischer Zuschlagstoffe, 0,1 - 0,3 Gew.-Teile Flugasche und 0 - 1, insbesondere 0,2 - 0,6 Gew.-Teile verfestigender Zusatzstoffe zugesetzt.

Damit das erfindungsgemäße Verfahren glatt abläuft, ist es notwendig, die Reaktionsprodukte gründlich zu vermischen. Es ist bevorzugt, zunächst die festen Bestandteile, d.h. Portland-Zement inklusive basischer Zuschlagstoffe, die Flugasche, das feste Blähmittel und gegebenenfalls die verfestigenden Zusatzstoffe für sich gründlich zu vermischen, beispielsweise durch gemeinsames vermahlen.

Im allgemeinen wird eine Mischung der flüssigen Reaktionspartner, d.h. der sauer reagierenden wäßrigen Lösung der primären Metallphosphate, gegebenenfalls unter Zusatz von Porenreglern, Schaumstabilisatoren, sauren Beschleunigern und Hydrophobiermitteln vorgelegt und das Gemisch der festen Komponenten eingearbeitet.

Das Vermischen der flüssigen und der festen Komponenten erfolgt im allgemeinen bei 10 - 50°C, bevorzugt 15 - 30°C, mit Hilfe starker Mischaggregate wie Rührwerke, Kneter oder Extruder. Die Mischzeit beträgt je nach Art der Komponenten und der Mischintensität etwa 30 Sek. bis 3 Min. Beim Mischen wird eine Erwärmung auf 40 - 80°C, beobachtet. Günstig ist eine Temperaturerhöhung auf maximal 60°C. Die vermischte Reaktionsmasse hat pastenartige Konsistenz und wird in Formen eingefüllt. Das Aufschäumen beginnt nach weiteren 20 - 40 Sek. und ist nach 2 - 20 Min. beendet. In einigen Fällen wird eine geringe Schaumbildung bereits beim Vermischen der Komponenten beobachtet. In den meisten Fällen ist das Aufschäumen nach 5 - 10 Min. beendet. Beim Stehenlassen ist ein zusätzliches Aufheizen von außen nicht vorteilhaft.

Nach 1 - 80 Stunden Stehen bei Raumtemperatur können die Formen entfernt werden. Der Schaum hat dann Schwamm-Konsistenz, ist knetbar und besitzt eine größere mechanische Festigkeit. In den meisten Fällen reicht ein Stehen von 5 - 20 Stunden aus. Nur in sehr wenigen Fällen ist der Schaum nach einem Stehenlassen von weniger als 1 Stunde, beispielsweise von 15 Min., so stabil, daß die Formen ohne Nachteil für den Schaum entfernt werden können. Um den Schaum zu einem mechanisch stabilen Schaumstoff umzuwandeln, ist zunächst eine Trocknung erforderlich. Diese Trocknung muß langsam erfolgen, da es andernfalls zum Zusammensacken des Schaums oder zur Bildung von Spannungsrissen im Schaumstoff kommen kann. Das langsame Aufheizen auf Temperaturen von 120 bis maximal 160°C benötigt in den meisten Fällen 2 bis 48 Stunden, vorzugsweise 4 bis 24 Stunden. Bei einem weiteren Trocknen wird nur noch ein geringer Gewichtsverlust beobachtet, d.h. das anhaftende Wasser ist in der Hauptsache entfernt. Nach dem Trocknen muß der getrocknete Schaumstoff zur Aushärtung auf Temperaturen von 220 bis 500°C erhitzt werden. Bevorzugt sind hierbei Temperaturen von 240 - 300°C. Für das Aushärten sind mindestens 5 Min. Behandlung bei den genannten Temperaturen erforderlich. Im Hinblick auf den schlechten Wärmedurchgang, insbesondere bei größeren Formkörpern, ist es jedoch bevorzugt die Schaumstoffe 30 - 90 Minuten bei den genannten Temperaturen auszuhärten. Durch diese Behandlung werden die Schaumstoffe gleichzeitig wasserfest gemacht.

Nach dem Aushärten werden die Schaumstoffe abgekühlt. In den meisten Fällen zeigt sich, bezogen auf die Dimensionen der angewandten Form, ein Längenschrumpf von 5 - 10 %, der durch das Stehen bei Raumtemperatur, die Trocknung und das Erhitzen hervorgerufen wurde. Bei einem weiteren Erhitzen des gehärteten Schaumstoffs, z.B. Behandeln bei 300°C während 1 Stunde, wird jedoch kein nennenswerter zusätzlicher Schrumpf ("thermischer Schrumpf") mehr beobachtet. Durch langsames Aufheizen des Schaumes beim Trocknen und durch langsames Abkühlen des gehärteten Schaumstoffs, im allgemeinen während 2 - 48 Stunden, insbesondere 4 - 24 Stunden, auf Raumtemperatur läßt sich das unerwünschte Auftreten von Spannungsrissen im Schaumstoff vermeiden.

In Abhängigkeit von den angewandten Gewichtsverhältnissen der Mischungskomponenten und der Menge des entbundenen Gases lassen sich die Eigenschaften der erhaltenen Schaumstoffe erheblich modifizieren. Die Schaumstoffe weisen Dichten von 100 - 500 g/l, sowie offene und geschlossene Poren mit 0,2 - 4 mm Durchmesser auf. Das Volumenverhältnis von Feststoff zu Poren im Schaumstoff kann im Bereich von etwa 1:5 bis 1:20 liegen. Bevorzugt sind Volumenverhältnisse von Feststoff:Poren von 1:8 (Dichte ca. 250 g/l) bis 1:15 (Dichte ca. 150 g/l).

Die nach dem erfindungsgemäßen Verfahren erhaltenen Schaumstoffe weisen im allgemeinen folgende Zusammensetzung auf:

$$2 - 10 \text{ Gew.-\% } MgO,$$

mindestens 8, aber weniger als 18 Gew.-% CaO,

$$0 - 5 \text{ Gew.-\% } (FeO + Fe_2O_3)$$
$$2 - 20 \text{ Gew.-\% } Al_2O_3$$
$$3 - 20 \text{ Gew.-\% } ZnO$$
$$12 - 30 \text{ Gew.-\% } SiO_2$$

mindestens 20, aber weniger als 38 Gew.-% $P_2O_5$

$$0 - 1 \text{ Gew.-\% Alkalimetalloxide und jeweils}$$
$$0 - 5 \text{ Gew.-\% } B_2O_3, SO_3, C.$$

Bevorzugt sind Schaumstoffe mit folgender Zusammensetzung (in der festen Phase):

$$2 - 8 \text{ Gew.-\% } MgO$$
$$9 - 15 \text{ Gew.-\% } CaO$$
$$0 - 3 \text{ Gew.-\% } FeO + Fe_2O_3$$
$$3 - 8 \text{ Gew.-\% } Al_2O_3$$
$$3 - 8 \text{ Gew.-\% } ZnO$$
$$15 - 25 \text{ Gew.-\% } SiO_2$$
$$22 - 30 \text{ Gew.-\% } P_2O_5 \text{ und je}$$
$$0 - 3 \text{ Gew.-\% } B_2O_3, SO_3, C.$$

Bevorzugt sind ferner Schaumstoffe, in denen das Gewichtsverhältnis $(Al_2O_3 + ZnO + CaO + MgO + FeO + Fe_2O_3):P_2O_5$ 0,5:1 bis 1,5:1, insbesondere 0,9:1 bis 1,3:1, beträgt.

Die erhaltenen Schaumstoffe eignen sich vor allem zur Anwendung als nicht brennbares Isoliermaterial, insbesondere zur Wärmedämmung. Sie enthalten im allgemeinen keine organischen Anteile, sind unbrennbar, hitzestabil bis über 800°C und spalten keine giftigen Gase ab. Der thermische Schrumpf, gemessen nach 60 Minuten Erhitzen auf 300°C und Abkühlen an der längsten Abmessung des Festkörpers, liegt unter 1 %.

Die Möglichkeit zu verschäumen ist weitgehend unabhängig von der Art der verwendeten äußeren Form. Es lassen sich daher die erfindungsgemäßen Schaumstoffe zu wärmedämmenden Bauelementen beliebiger Gestalt verarbeiten, insbesondere zu Wärmedämm-Platten, die z.B. vorteilhaft zur Wärmeisolierung von Außenwänden von Gebäuden verwendet werden können.

Die Erfindung wird durch die nachstehenden Beispiele erläutert.

Beispiel 1:

a) Bereitung der Metallphosphat-Lösung

In 2048 g   85 %iger Phosphorsäure werden bei 25°C innerhalb von 15 Minuten

325,6 g Zinkoxid eingetragen. Dabei steigt die Temperatur bis auf 75°C an. Es wird bei 75°C nachgerührt, bis das Zinkoxid gelöst ist. Dann werden innerhalb von 30 Minuten

254 g Aluminiumhydroxid zugefügt und das Reaktionsgemisch bei 110 - 120°C nacherhitzt, bis eine klare Lösung resultiert. Bei 125 - 130°C werden ca. 130 ml Wasser abdestilliert. Es verbleiben 2498 g einer 83 %igen sauren Zink-/Aluminium-Phosphatlösung I (Atom-Verhältnis Al:Zn = 0,814) mit einer Viskosität von 110.000 (m Pa.s) bei 25°C und dem Berechnungsindex $n_D^{20}$ = 1,4792.

b) Herstellung des Schaumstoffs

21 g Portlandzement PZ 35
4 g Glasfasern von 3 mm Länge
4 g Talkum
4 g Aluminiumhydroxid

- 14 -  0078507

20 g Flugasche (SiO$_2$-Füller N, Hersteller SKW Trostberg)
8 g Basisches Magnesiumcarbonat

werden innig vermahlen und bei 27$^o$C zur Mischung aus
66,6 g der Metallphosphat-Lösung und einem Tropfen (ca.
0,1 g) eines Gemisches aus 10 g Dimethyldodecylamin und
20 g eines Polysiloxans ("Silicon SH" der Wacker-Chemie GmbH, München) zugegeben.

Die feste und die flüssige Phase werden 50 Sekunden
lang mit einem starken Elektrorührer innig vermischt.
Die resultierende homogene Paste wird in eine Aluminiumform übergeführt. Unter Selbsterwärmung auf 40 -
60$^o$C setzt die Schaumbildung ein. Nach 16 Stunden Stehen bei Raumtemperatur wird der noch feuchte Schaum der
Form entnommen und jeweils eine Stunde auf 50$^o$C, 60$^o$C,
80$^o$C, 100$^o$C, 150$^o$C und 300$^o$C erhitzt. Es resultiert
ein fester wasserresistenter Schaumstoff mit Poren von
0,2 - 3 mm Durchmesser und einer Dichte von ca. 135 g/l.

Die eingesetzte Flugasche hatte folgende Zusammensetzung:

| | | | |
|---|---|---|---|
| SiO$_2$ | 84 | - 92 | % |
| Gesamt-Fe | 0,9 | - 2,6 | % (als Fe$_2$O$_3$) |
| freies Fe | 0,25 | - 0,75 | % |
| Al$_2$O$_3$ | 0,6 | - 1,2 | % |
| MgO | 1,2 | - 2,5 | % |
| CaO | 0,7 | - 3,2 | % |
| freies C | 0,2 | - 0,5 | %. |

- 15 -

0078507

Beispiel 2:

Es wird analog verfahren wie im Beispiel 1.

Die feste Phase besteht aus

    20 g Portlandzement PZ 35

    10 g Tonerdeschmelzzement

     4 g Glasfasern (3 mm)

     4 g Talkum

    16 g Flugasche von Beispiel 1

     8 g Basisches Magnesiumcarbonat,

die flüssige Phase aus 66,6 g der Phosphatlösung und einem Tropfen des Polysiloxans von Beispiel 1.

Es resultiert ein sehr feinporiger Schaumstoff von der Dichte 197 g/l.

Ein ähnliches Ergebnis wird erzielt, wenn die Flugasche von Beispiel 1 ersetzt wird durch eine Flugasche aus einem Kohlekraftwerk ("Safament RW" der Saarfilterasche-Vertriebs-GmbH) mit folgender Zusammensetzung:

| | |
|---|---|
| $SiO_2$ | 95,5 % |
| C | 1,0 % |
| $K_2O$ | 0,7 % |
| $Na_2O$ | 0,1 % |
| $Al_2O_3$ | 0,5 % |
| MgO | 0,4 % |

Beispiel 3:

Bereitung der Metallphosphat-Lösung.

Aus 1200 g einer 73,3 %igen schwarzgefärbten rohen technischen Phosphorsäure, die noch 0,4 % $Al_2O_3$, 0,6 % ZnO, 0,7 % $Fe_2O_3$ und 0,8 % MgO enthält, werden bei 80 mbar 166 ml Wasser abdestilliert. Im Rückstand von 1034 g werden zunächst bei 30 - 75°C 162,5 g Zinkoxid und dann bei 80 - 120°C 127 g Aluminiumhydroxid aufgelöst. Die resultierende Metallphosphatlösung (Atomverhältnis Al:Zn = ca. 0,81) hat bei 25°C eine Viskosität von 170.100 (m Pa.s).

Die Herstellung des Schaumstoffes erfolgt nach der Verfahrensweise von Beispiel 1.

Zusammensetzung der festen Phase:

16,8 g Portlandzement PZ 35
20   g Flugasche (Zusammensetzung wie im Beispiel 1)
3,2 g Aluminiumhydroxid
3,2 g Talkum
6,4 g Basisches Magnesiumcarbonat.

Zusammensetzung der flüssigen Phase:

53,2 g der Metallphosphat-Lösung, 1 Tropfen eines Gemisches aus 10 g Dimethyldodecylamin und 20 g Polysiloxan und zusätzlich 1 Tropfen Polysiloxan.

Der resultierende Schaumstoff hat Poren von 0,3 - 4 mm Durchmesser und eine Dichte von 128 g/l.

Beispiel 4:

a) Bereitung der Metallphosphat-Lösung:
Man verfährt wie bei der Bereitung der Metallphosphat-Lösung in Beispiel 1, mit dem einen Unterschied, daß nicht 130 ml, sondern 165 ml Wasser abdestilliert werden. Es resultiert eine 84,2 %ige saure Zink-/Aluminium-Phosphatlösung (Atomverhältnis Al:Zn = 0,814) mit einer Viskosität von 296.000 mPa.s bei 25°C und dem Brechungsindex $n_D^{20}$ = 1,4806.

b) Die Herstellung des Schaumstoffes erfolgt nach der Verfahrensweise von Beispiel 1.

Zusammensetzung der festen Phase:

0078507

20 g Portlandzement PZ 35

14 g Flugasche (wie im Beispiel 1)

2 g Glasfasern (3 mm)

10 g Talkum

8 g Basisches Magnesiumcarbonat

Die flüssige Phase besteht aus 57 g der Metallphosphat-Lösung und einem Tropfen des Polysiloxans von Beispiel 1. Es wird ein sehr feinporiger Schaumstoff von der Dichte 171 g/l gebildet.

0078507

Patentansprüche:                    HOE 81/F 294

1.  Verfahren zur Herstellung eines anorganischen Schaumstoffes aus Zement, einer Monoaluminiumphosphat enthaltenden Lösung und einem Blähmittel, dadurch gekennzeichnet, daß man aus

    a) 1 Gewichtsteil einer wäßrigen Lösung von Aluminium-
       und Zinkphosphat mit einem Wassergehalt von 12 - 25
       Gew.-% und einem Atomverhältnis Al:Zn von 0,3:1 bis
       2,0:1, die zusätzlich Magnesium- und/ oder Calcium-
       Ionen in einem Äquivalentverhältnis (Mg + Ca):(Al +
       Zn) von 0:1 bis 0,25:1 enthalten kann und ein Äquivalentverhältnis Ortho-Phosphat:(Al + Zn + Mg + Ca)
       von 2,7:1 bis 3,3:1 aufweist, ·

    b) 0,2 bis 0,8 Gew.-Teilen Portland-Zement, der teilweise durch basische Zuschlagstoffe ersetzt sein
       · kann,

    c) einem in saurem Milieu wirksamen Blähmittel,

    d) 0,05 bis 0,5 Gew.-Teilen einer Flugasche mit über
       80 Gew.-% $SiO_2$,

    e) gegebenenfalls unter Zusatz von verfestigenden Zusatzstoffen, Porenreglern, Schaumstabilisatoren und
       sauren Beschleunigern,

    eine Mischung bereitet, man dabei die Menge des Blähmittels so bemißt, daß bei der Reaktion 2 bis 10 ml
    Gas pro Gramm der Reaktionsmischung  entbunden werden,
    man das  aufschäumende Gemisch in eine Form füllt, man
    den Schaum mindestens 1 Stunde im Temperaturbereich
    von 0 - 60°C hält, man den Schaum der Form entnimmt,
    ihn langsam auf Temperaturen von 120 - 160°C aufheizt,
    bis die Hauptmenge des Wassers entfernt ist, man anschließend auf eine Temperatur von 220° - 500°C erhitzt und den Schaumstoff mindestens 5 Min. in diesem
Temperaturbereich hält.

2. Verfahren nach Anspruch 1, dadurch gekennzeichnet,
daß dem Portland-Zement 0 - 150 Gew.-% (bezogen auf
Portland-Zement) basische Zuschlagstoffe beigefügt
sind.

3. Verfahren nach Anspruch 1 oder 2, dadurch gekennzeichnet, daß die basischen Zuschlagstoffe ausgewählt sind
aus der Gruppe bestehend aus Hochofenschmelzzement,
Tonerdeschmelzzement und den Oxiden und Hydroxiden von
Zn, Mg und Al.

4. Verfahren nach Anspruch 1, dadurch gekennzeichnet,
daß das Blähmittel ein basisches Magnesiumcarbonat
ist.

5. Anorganischer Schaumstoff der Dichte 100 - 500 g/l
mit offenen und geschlossenen Poren mit 0,2 - 4 mm
Durchmesser, einem thermischen Schrumpf unter 1 % und
einer Zusammensetzung in der festen Phase von

$\qquad$ 2 - 10 Gew.-% MgO,

mindestens 8, aber weniger als 18 Gew.-% CaO,

$\qquad$ 0 - 5 Gew.-% (FeO + $Fe_2O_3$),

$\qquad$ 2 - 20 Gew.-% $Al_2O_3$,

$\qquad$ 3 - 20 Gew.-% ZnO,

$\qquad$ 12 - 30 Gew.-% $SiO_2$,

mindestens 20, aber weniger als 38 Gew.-% $P_2O_5$

$\qquad$ 0 - 1 Gew.-% Alkalimetalloxide

und jeweils 0 - 5 Gew.-% $B_2O_3$, $SO_3$, C.

6. Schaumstoff nach Beispiel 5 mit einer Zusammensetzung
in der festen Phase von

$2 - 8$ Gew.-% MgO

$.9 - 15$ Gew.-% CaO

$0 - 3$ Gew.-% FeO + Fe$_2$O$_3$

$3 - 8$ Gew.-% Al$_2$O$_3$

$3 - 8$ Gew.-% ZnO

$15 - 25$ Gew.-% SiO$_2$

$22 - 30$ Gew.-% P$_2$O$_5$

und je $0 - 3$ Gew.-% B$_2$O$_3$, SO$_3$, C.

7. Schaumstoff nach Anspruch 5, dadurch gekennzeichnet, daß das Gewichtsverhältnis (Al$_2$O$_3$ + ZnO + CaO + MgO + FeO + Fe$_2$O$_3$):P$_2$O$_5$ 0,5:1 bis 1,5:1 beträgt.

# EUROPÄISCHER RECHERCHENBERICHT

Europäisches
Patentamt

0078507

Nummer der Anmeldung

EP 82 10 9953

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | --- <br> DE-A-2 853 333 (WEGENER, HERMANN) <br> * Ansprüche 1-6 * | 1 | C 04 B 29/02 |
| A | --- <br> GB-A-1 429 555 (I.C.I.) <br> * Seite 1, linke Spalte; Seite 2, Zeilen 119-122; Seite 3, Zeilen 39-45; Ansprüche 1-16 * | 1 | |
| A | --- <br> US-A-3 804 651 (SEMLER) <br> * Ansprüche 1-19 * | 1 | |
| A | --- <br> DE-A-2 639 227 (SHIKOKU KAKEN KOGYO K.K.) <br> * Ansprüche 1-17 * | 1 | |
| D,A | --- <br> DE-A-2 714 735 (FA. E. SCHWARZ) <br> * Ansprüche 1-13 * | 1 | RECHERCHIERTE SACHGEBIETE (Int. Cl. 3) <br><br> C 04 B |
| D,A | --- <br> DE-A-2 756 198 (ASAHI-DOW LTD.) <br> * Ansprüche 1-22 * | 1 | |
| D,A | --- <br> US-A-3 382 082 (NASA) <br> * Ansprüche 1-22 * | 1 | |
| D,A | --- <br> US-A-3 762 935 (LEACH) <br> * Ansprüche 1-10 * <br><br> ----- | 1 | |

Der vorliegende Recherchenbericht wurde für alle Patentansprüche erstellt.

| Recherchenort <br> DEN HAAG | Abschlußdatum der Recherche <br> 27-01-1983 | Prüfer <br> STANGE R.L.H |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82